Europäisches Patentamt

European Patent Office

Office européen des brevets

(19)

(11) Veröffentlichungsnummer: **0 098 432**
**B1**

(12) **EUROPÄISCHE PATENTSCHRIFT**

(45) Veröffentlichungstag der Patentschrift:
03.09.86

(21) Anmeldenummer: 83105958.9

(22) Anmeldetag: 18.06.83

(51) Int. Cl.⁴: **C 08 F 6/14**

(54) Kontinuierliches Verfahren zum Eindampfen von W/O-Emulsionen.

(30) Priorität: 03.07.82 DE 3224994

(43) Veröffentlichungstag der Anmeldung:
18.01.84 Patentblatt 84/3

(45) Bekanntmachung des Hinweises auf die Patenterteilung:
03.09.86 Patentblatt 86/36

(84) Benannte Vertragsstaaten:
BE DE FR GB IT NL

(56) Entgegenhaltungen:
US-A-3 975 341
US-A-4 021 399

(73) Patentinhaber: BAYER AG, Konzernverwaltung RP Patentabteilung, D-5090 Leverkusen 1 Bayerwerk (DE)

(72) Erfinder: Goldmann, Gerd, Dr., Emil- Feinendegen Strasse 1, D-4150 Krefeld 12 (DE)
Erfinder: Spott, Georg, Dipl.- Ing., Rather Strasse 75, D-4150 Krefeld (DE)
Erfinder: Fröhlich, Christian, Dr., Dörperhof Strasse 14, D-4150 Krefeld (DE)

EP 0 098 432 B1

## Beschreibung

Die Erfindung betrifft ein kontinuierliches Verfahren zum Eindampfen von W/O-Emulsionen, die bei einer Emulsions-Polymerisation von ethylenisch ungesättigten, wasserlöslichen Monomeren anfallen.

Aus der Patentliteratur sind Verfahren zur Polymerisation von ethylenisch ungesättigten, wasserlöslichen Monomeren in "umgekehrter Emulsion", d.h. in W/O-Emulsion (Wasser in Öl) bekannt. Hierzu werden mit Hilfe eines W/O-Emulgators wäßrige Monomerlösungen in einem inerten Kohlenwasserstoff (Dispergieröl) emulgiert und in Gegenwart eines peroxidischen Katalysators (DE-OS 1 089 173) erwärmt bzw. in Gegenwart eines in Wasser- oder Ölphase löslichen Photoinitiators mit UV-Licht (DE-OS 2 354 006) bestrahlt.

Aus dem entstehenden Reaktionsgemisch kann nach DE-OS 2 419 764 durch azeotrope Entwässerung eine nichtwäßrige Dispersion des wasserlöslichen Polymerisates mit einem Restwassergehalt von weniger als 5 Gew.-% bezogen auf Polymer gewonnen werden. Diese anwendungsfertige Dispersion besitzt einen relativ niedrigen Polymergehalt von etwa 35-36 Gew.-% bezogen auf die Gesamtdispersion.

Da für die üblichen Anwendungen jedoch in erster Linie das Polymer als Wirksubstanz von Bedeutung ist, beschreibt DE-OS 2 926 103 eine nichtwäßrige Dispersion mit einem erhöhten polymergehalt von 45-60 % mit einem Restwassergehalt von weniger als 5 %, bezogen auf Polymer. In den dort beschriebenen Beispielen wurde im Labormaßstab in einem Rotationsverdampfer ein Polymergehalt von 57 % bei einem Restwassergehalt von 2 % erreicht.

Die Aufkonzentrierung dieser Emulsion oder anderer Emulsionen aus der W/O-Polymerisation bereitet jedoch im technischen Maßstab außerordentliche Schwierigkeiten.

Allgemein ist von Emulsionen nämlich bekannt, daß das Eindampfen der äußeren Phase "meistens" zu einem Brechen der Emulsion führt (Ullmann's Enzyklopädie der Technischen Chemie, 4. Auflage, 1975, Bd. 10, S. 453). Im vorliegenden Fall werden Koaleszenz und Koagulation noch viel wahrscheinlicher, weil neben der äußeren Phase bevorzugt auch die innere Phase (d. h. das Wasser) ausdampft und die Emulsion selbst während des Verdampfungsvorgangs in eine nichtwäßrige Dispersion des Polymeren in der Ölphase übergeht.

DE-OS 2 064 101 erwähnt, daß beim Eindampfen ähnlicher Emulsionen zu einer nichtwäßrigen Dispersion beim Übergang zwischen Emulsion und Dispersion eine "kritische Phase" durchlaufen wird, während der "das System stark zur Koagulation" neigt.

Beobachtungen zeigen zudem, daß die vorliegenden Emulsionen bei Wasserzugabe brechen. Daraus ergibt sich eine Empfindlichkeit gegen Rückkondensation oder Vermischen mit Kondensattropfen, die lokal zu einem Brechen der Emulsion und somit zu Feststoffausscheidungen führen.

Beim diskontinuierlichen Eindampfen können geringe Koagulationsraten apparativ verkraftet werden. Ein kontinuierliches Eindampfverfahren scheitert aber bereits bei einer Koagulation von geringen Polymerisatmengen, weil das ausfallende Polymerisat zu gummiartigen oder harten Belägen an der Heizfläche und zu Verstopfungen und Verklumpungen im Verdampferablauf bzw. im Brüdenabscheider führt. Selbst in Dünnschichtverdampfern bilden sich nach einiger Zeit Ablagerungen an Wischern, wobei keine Eindampfparameter gefunden werden können, unter denen ein störungsfreier Betrieb über längere Zeiten möglich ist. Bei Fallstromverdampfern bewirken kleinste Ablagerungen sofort eine Störung des Verdampfungsvorganges und somit ein Aufwachsen der Beläge.

Der Erfindung liegt sie Aufgabe zugrunde ein Verfahren zu finden, welches die vorbeschriebenen Nachteile vermeidet.

Die Aufgabe wird erfindungsgemäß dadurch gelöst, daß eine W/O Emulsion mit einem Wassergehalt von mehr als 25 Gew.-% und einem Polymeranteil von 28-40 Gew.-% bei Temperaturen von 59 bis 190°C unter Vakuum in einem Strömungsrohr in eine nichtwäßrige Polymerdispersion in Öl mit einem am Polymer anhaftenden Restwassergehalt von weniger als 14 Gew.-% (bezogen auf Polymeres) und einem Polymergehalt von 45-65 Gew.-% überführt wird, wobei mindestens zwei Phasenströmen stetig vorhanden sein müssen.

Es wurde gefunden, daß eine W/O-Emulsion sich ohne Bildung von störenden Ablagerungen kontinuierlich in einem Rohr, welches beispielsweise ein stetig gewendeltes rundes Rohr sein kann und wobei mindestens zwei Phasenströme vorliegen, eindampfen läßt.

Für den Fachmann war dabei überraschend, daß die bekannte starke Scherbeanspruchung, die in derartigen Rohren durch den mit hoher Geschwindigkeit strömenden Dampf auf die Flüssigkeit ausgeübt wird, in der Emulsion selbst und auch bei dem kritischen Übergang vo Emulsion zu Dispersion keine Koagulation auslöst.

Weiter bleibt die Emulsion bzw. Dispersion so stabil, daß auch im anschließenden Brüdenabscheider keinerlei Ablagerungen beobachtet werden konnten.

In einer besonderen Ausführungsform beträgt die Temperatur 80-140°C, weil in diesem Bereich das Vakuum mit einfachen Mitteln realisierbar ist und auch temperaturempfindliche Emulsionen schonend eingedampft werden können.

In einer weiteren Ausführungsform werden End-Wassergehalte bis zu < 2 % (bezogen auf wasserhaltiges Polymeres) durch Verdünnung der äußeren Phase der Emulsion mit dem Dispergieröl selbst oder einer anderen darin löslichen Substanz und anschließendes Eindampfen eingestellt bzw. geregelt.

Durch diese Maßnahme gelingt es, den Wassergehalt bei gleicher Polymerkonzentration durch Verdünnung der äußeren Phase mit weiterem Dispergieröl und Eindampfen auf gleichen Feststoffgehalt weiter zu reduzieren.

In einer Ausführungsform erfolgt die Verdünnung während des Verdampfungsvorganges durch Einleiten des Verdünnungsmittels in das Rohr.

Neben der bekannten Zugabe von Verdünnungsmittel vor der Verdampfung ist es möglich, dieses stufenweise während des Verdampfungsvorganges zuzusetzen. Zweckmäßigerweise wird dabei das gleiche Dispergieröl wie bei der Reaktion verwendet, da das ausgedampfte Dispergieröl bei der Reaktion dann wieder eingesetzt werden kann.

Besonders vorteilhaft ist das Verfahren bei Monomer-Emulsionen mit Teilchengrößen von 50 - 200 nm einzusetzen.

Ein Ausführungsbeispiel ist in der Zeichnung dargestellt und wird im folgenden anhand eines Fließschemas näher beschrieben.

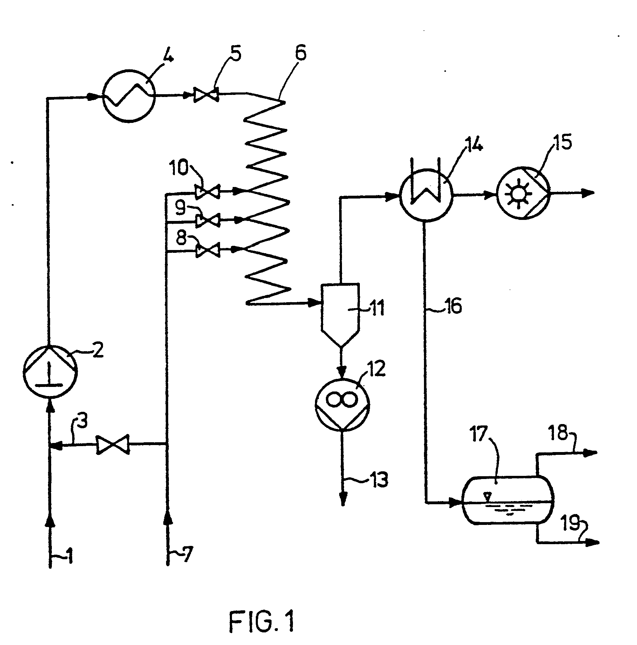

Fig. 1 zeigt eine apparative Anordnung des erfindungsgemäßen Verfahrens. Die Emulsion aus der Reaktion wird über Leitung 1 und Pumpe 2 einem Vorwärmer 4 zugeführt und über ein Drosselventil 5 ins Vakuum entspannt, wobei ein Dampfanteil erzeugt wird. Am Ende des gewendelten Strömungsrohres 6 wird die eingedampfte Emulsion in einem beheizbaren Abscheider 11 von den Brüden getrennt und durch Zahnradpumpe 12 und Leitung 13 ausgetragen. Die Brüden werden im Kondensator 14 niedergeschlagen und durch eine Pumpe oder bevorzugt barometrisch über Leitung 16 in den Phasentrenner 17 ausgetragen. Organische und wäßrige Phase 18 bzw. 19 werden zur Herstellung von neuem Reaktionsprodukt zurückgeführt. Das Vakuum wird über eine Flüssigkeitsringpumpe 15 oder andere geeignete Einrichtungen erzeugt.

Das Dispergieröl zur Verdünnung der äußeren Phase wird über Leitung 7 entweder durch Leitung 3 in die Reaktionslösung gegeben oder an einer oder mehreren Stellen durch die Leitungen 8, 9, 10 direkt in den Schlangenrohrverdampfer dosiert. In diesem Fall erfolgt die Einleitung bevorzugt mit Siedetemperatur.

Als zwangsdurchlaufenes Strömungsrohr wird dabei ein stetig gewendeltes Rohr (Rohrdurchmesser/Krümmungsdurchmesser = 0,01 - 0,2, Steigung h = 1-5 Rohrdurchmesser) anderen denkbaren Bauarten gegenüber bevorzugt.

Die Emulsion wird dem Strömungsrohr vorteilhaft so zugeführt, daß beim Eintritt in das Rohr durch Entspannungsverdampfung sofort ein gewisser Dampfanteil erzeugt wird. Bei Betrieb unter Normaldruck soll der Dampfanteil über 5 Gew.-% liegen. Bei Vakuumbetrieb ergibt sich die Mindestausdampfmenge aus der Bedingung, daß der Staudruck $\rho u^2/2$ ($\rho$ = Dichte, u = Geschwindigkeit) der strömenden Dampfphase mindestens denselben Wert wie bei Normaldruck annehmen soll.

Als Dispergieröl kann jede Flüssigkeit dienen, die mit Wasser bzw. den wäßrigen Monomerlösungen nicht mischbar ist. Vorzugsweise verwendet man flüssige aliphatische und aromatische Kohlenwasserstoffe sowie deren Substitutionsprodukte und Gemische. Erwähnt seien: Benzol, Toluol, Xylol, Cyclohexan, Dekalin, Tetralin, Mineralöle, Kerosine, Petroleum, Benzin, Lackbenzin und Mischungen davon. Besonders bevorzugt sind aliphatische $C_8$-$C_{20}$-Kohlenwasserstoffe und deren Gemische.

## Beispiel 1

10 kg/h Emulsion folgender Zusammensetzung
Ölphase 81,6 % $C_{10}$-$C_{12}$-Paraffingemisch
9,2 % Sorbitanmonooleat
9,2 % Ethoxylat von Ölsäure mit 6 Mol Ethylenoxid
Wäßrige Phase 55,3 % Acrylamid-Acrylsäure-Copolymeres (Monomerenverhältnis = 4,22: 1)
44,7 % Wasser
Phasenverhältnis: Wäßrige Phase:Ölphase = 1,82: 1

werden einem Schlangenrohr (Durchmesser: 10 mm, Krümmungsdurchmesser: 190 mm, Länge: 3750 mm) mit einer Temperatur von 85°C zugeführt. Die Heizmitteltemperatur beträgt 100°C, der Druck im Brüdenabscheider 100 mbar, die Endkonzentration 51-57 Gew.-%, der Endwassergehalt ca. 9,5 - 13,6 Gew.-% (bezogen auf wasserhaltiges Polymeres). Das Kondensat trennt sich in zwei Phasen, der Anteil der wäßrigen Phase beträgt etwa 77 %. Während einer Versuchszeit von 6,5 h traten keinerlei Ablagerungen in Verdampfer und Brüdenabscheider auf.

## Beispiel 2

Die Produktdispersion aus Beispiel 1 mit 51 - 57 Gew.-% polymerkonzentration und ca. 9,5 - 13,6 % Wassergehalt (bezogen auf wasserhaltiges Polymeres) wird mit 20 % Paraffinölgemisch $C_{10}$-$C_{12}$ versetzt und erneut im Schlangenrohr eingedampft. Bei Polymerkonzentrationen von 48-52 % liegt der Wassergehalt bei 1,4 - 2,1 Gew.-% (bezogen auf wasserhaltiges Polymeres).

## Patentansprüche

1. Kontinuierliches Verfahren zum Eindampfen von W/O-Emulsionen, die bei einer Emulsions-Polymerisation von ethylenisch ungesättigten, wasserlöslichen Monomeren anfallen, dadurch gekennzeichnet, daß eine W/O-Emulsion mit einem Wassergehalt von mehr als 25 Gew.-% und einem Polymeranteil von 28-40 Gew.-% bei Temperaturen von 50 bis 190°C unter Vakuum in einem Strömungsrohr in eine nichtwäßrige Polymerdispersion in Öl mit einem am Polymer anhaftenden Restwassergehalt von weniger als 14 Gew.-% (bezogen auf Polymeres) und einem Polymergehalt von 45-65 Gew.-% überführt wird, wobei minestens zwei Phasenströme stetig vorhanden sein müssen.

2. Kontinuierliches Verfahren nach Anspruch 1, dadurch gekennzeichnet, daß die Temperatur 80 bis 140°C beträgt.

3. Kontinuierliches Verfahren nach Anspruch 1 oder 2, dadurch gekennzeichnet, daß End-Wassergehalte bis zu < 2 % (bezogen auf wasserhaltiges Polymeres) durch Verdünnung der äußeren Phase der Emulsion mit dem Dispergieröl selbst oder einer anderen darin löslichen Substanz und anschließendes Eindampfen eingestellt bzw. geregelt werden.

4. Kontinuierliches Verfahren nach Anspruch 1 bis 3, dadurch gekennzeichnet, daß die Verdünnung während des Verdampfungsvorgangs durch Einleiten des Verdünnungsmittels in das Strömungsrohr erfolgt.

## Claims

1. Continuous process for evaporating W/O emulsions which form during the emulsion polymerisation of ethylenically unsaturated, water-soluble monomers, characterised in that a W/O emulsion having a water content of more than 25% by weight and a polymer content of 28-40% by weight is converted into a non-aqueous polymer dispersion in oil having a residual water content adhering to the polymer of less than 14% by weight (based on the polyner) and a polymer content of 45-65% by weight, in a flow tube at temperatures of 50 to 190°C in vacuo, at least two phase streams having always to be present.

2. Continuous process according to Claim 1, characterised in that the temperature is 80 to 140°C.

3. Continuous process according to Claim 1 or 2, characterised in that final water contents of up to < 2% (based on the aqueous polymer) are established or adjusted by diluting the outer phase of the emulsion with the dispersant oil itself or another substance which is soluble therein, followed by evaporation.

4. Continuous process according to Claim 1 to 3, characterised in that the dilution is carried out during the evaporation process by introducing the diluent into the flow tube.

## Revendications

1. Procédé continu de concentration par évaporation d'émulsions eau-dans-l'huile, qui se forment au cours d'une polymérisation en émulsion de monomères éthyléniquement insaturés solubles dans l'eau, caractérisé en ce qu'une émulsion eau-dans l'huile ayant une teneur en eau supérieure à 25% en poids et une proportion de polymère de 28-40% en poids est convertie à des températures de 50 à 190°C sous vide dans un tube de circulation en une dispersion de polymère non aqueuse dans l'huile avec une teneur en eau résiduelle adhérant au polymère de moins de 14% en poids (par rapport au polymère) et une teneur en polymère de 45-65% en poids, en l'occurence devant être présents constamment au moins deux courants de phases.

2. Procédé continu selon la revendication 1, caractérisé en ce que la température s'élève à 80 à 140°C.

3. Procédé continu selon la revendication 1 ou 2, caractérisé en ce que les teneurs finales en eau sont établies ou réglées jusqu'à moins de 2% (par rapport au polymère contenant de l'eau) par dilution de la phase externe de l'émulsion avec l'huile de dispersion proprement dite ou avec une autre substance qui s'y dissout, venant ensuite la concentration par évaporation.

4. Procédé continu selon les revendications 1 à 3, caractérisé en ce que la dilution a lieu au cours du processus de vaporisation par passage de l'agent de dilution dans le tube de circulation.

FIG. 1